# EUROPEAN PATENT APPLICATION

(11) **EP 4 517 484 A1**
(43) Date of publication of application: **05.03.2025**
(21) Application number: 24190439.0
(22) Date of filing: 23.07.2024
(51) Int. Cl.: G06F 1/30, G06F 1/28, H02J 9/06, H02M 1/00

(54) **POWER SUPPLY DEVICE CAPABLE OF STABILIZING SYSTEM POWER DURING SHUTDOWN**

(30) Priority: 31.08.2023 TW 112133039
(71) Applicant: Universal Microelectronics Co., Ltd., Taichung 40850 (TW)
(72) Inventor: WU, CHIEN-PING, TAICHUNG (TW)
(74) Representative: Straus, Alexander

(57) **Abstract**

A power supply device (10) is used to supply power to an electronic device (30). When the electronic device (30) enters a shutdown process, a microprocessor module (19) notifies the electronic device (30) to unload power of at least one connection interface (33) according to a monitoring condition, so that a main power (V_{M}) continues to supply power to a system load (31) of the electronic device (30). The monitoring condition includes that an energy storage element (15) is discharged from an upper voltage limit value (Vₘₐₓ) to a first monitoring voltage value (Vi). Subsequently, when the energy storage element (15) is discharged from the first monitoring voltage value (Vi) to a second monitoring voltage value (V₂), the microprocessor module (19) turns off the main power (V_{M}).

## Description

### BACKGROUND OF THE INVENTION

### 1. Field of the Invention

The present invention relates to power supply devices and more particularly, to a power supply device that can stabilize system power during shutdown.

### 2. Description of the Related Art

When computers, servers or other electronic computing devices that require a power supply device have a shutdown requirement, they need to complete the shutdown process within a specific period. The period required for the shutdown process is also called the hold-up time. Once the shutdown process begins, the energy storage element of the power supply device becomes the primary power source. However, an increase in the number of terminal loads or power consumption of connected computers, servers, or other devices may lead to insufficient stored power in the energy storage element to handle the shutdown process. Therefore, in order to ensure the proper operation of the shutdown process, a larger capacity energy storage element is currently chosen to provide stable power supply during shutdown.

However, due to the constraints of the power supply device size for computers, servers, or other computing devices, excessively large energy storage elements cannot be used, leading to unstable system power during shutdown.

### SUMMARY OF THE INVENTION

It is one objective of the present invention to provide a power supply device, which can effectively extend hold-up time without changing conditions of an energy storage element to stabilize system power during shutdown.

To attain the above objective, the power supply device is used to supply power to an electronic device, comprising a front-end power converter, a power factor corrector, an energy storage element, a back-end power converter, and a microprocessor module. The front-end power converter is used to rectify AC power. The power factor corrector is connected to the front-end power converter. The energy storage element is connected to the power factor corrector and used to be charged to an upper voltage limit value. The back-end power converter is connected to the power factor corrector, the energy storage element, and the electronic device, and outputs a main power to the electronic device for supplying power required for operation of a system load and at least one connection interface of the electronic device. The microprocessor module is connected to the front-end power converter, the power factor corrector, the energy storage element, the back-end power converter, and the electronic device. When the electronic device enters a shutdown process, the microprocessor module notifies the electronic device to unload power of the at least one connection interface according to a monitoring condition that includes the energy storage element is discharged from the upper voltage limit value to a first monitoring voltage value, so that the main power continues to supply power to the system load of the electronic device. Subsequently, when the energy storage element is discharged from the first monitoring voltage value to a second monitoring voltage value, the microprocessor module turns off the main power.

It can be seen from the above that the power supply device of the present invention can monitor the discharge status of the energy storage element through the microprocessor module during the shutdown process to reduce the load consuming power in advance. This leaves sufficient and stable system power for the system load of the electronic device to allow the electronic device to have sufficient power to complete the shutdown process.

Other advantages and features of the present invention will be fully understood by reference to the following specification in conjunction with the accompanying drawings, in which like reference signs denote like components of structure.

### BRIEF DESCRIPTION OF THE DRAWINGS

FIG. 1 is a block diagram of a power supply device of the present invention connected to an electronic device.
FIG. 2 is a sequence diagram based on FIG. 1, showing the power or signal operation status.

### DETAILED DESCRIPTION OF THE INVENTION

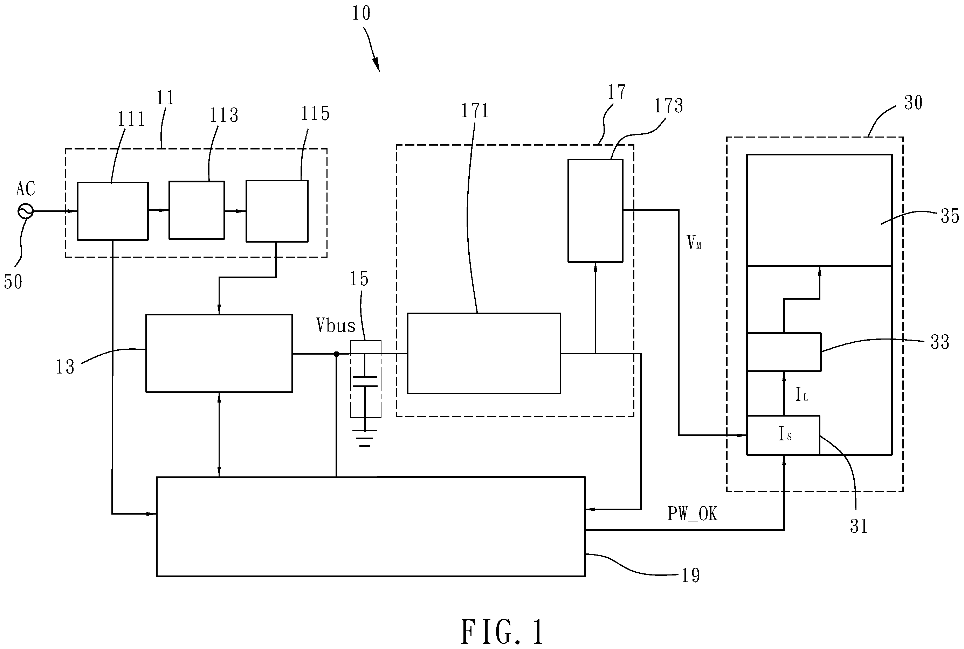

As shown in FIG. 1, a power supply device 10 is used to supply power to an electronic device 30, such as a server, a PoE switch, and other electronic product. The electronic device 30 includes a system load 31 and a connection interface 33. In FIG. 1, the solid line of the electronic device 30 can be regarded as a motherboard. The system load 31 is the operation of the system processor, which refers to the scheduling operation process of the system processor. The connection interface 33 is connected with the system load 31 and a terminal load 35. The connection interface 33 is, for example, a Power over Ethernet (PoE) port or other output/input port. The terminal load 35 is connected to the connection interface 33 for receiving power transmitted from the connection interface 33.

The power supply device 10 includes a front-end power converter 11, a power factor corrector 13, an energy storage element 15, a back-end power converter 17, and a microprocessor module 19.

The front-end power converter 11 is connected to an external AC power source 50 for rectifying AC power to DC power. The front-end power converter 11 includes an input protection unit 111, an electromagnetic protection unit 113, and a rectifier unit 115. The input protection unit 111 can be a fuse and a filter. The external AC power source 50 is connected to the input protection unit 111 for allowing the AC power to pass through the fuse and filter. The electromagnetic protection unit 113 is connected to the input protection unit 111 and the rectifier unit 115. The electromagnetic protection unit 113 is, for example, an electromagnetic interference (EMI) to filter out interference signals in the AC power.

The power factor corrector 13 is connected to the rectifier unit 115 of the front-end power converter 11 for enabling the current output by the rectifier unit 115 to follow the waveform of the input voltage.

The energy storage element 15 is connected to the power factor corrector 13 and charged through the power output by the power factor corrector 13 for enabling the voltage V_{bus} of the energy storage element 15 to be charged to an upper limit voltage value Vₘₐₓ. The upper limit voltage value Vₘₐₓ is related to the capacity condition of the energy storage element 15. In this embodiment, the energy storage element 15 is a capacitor (bulk capacitor) as an example. In other embodiments, the energy storage element 15 can also be other elements to provide fast charging and discharging functions. For example, the element is charged and discharged within milliseconds or faster.

The back-end power converter 17 is connected to the power factor corrector 13, the energy storage element 15, and the electronic device 30. The back-end power converter 17 outputs a main power V_{M} to the electronic device 30. The electronic device 30 distributes the main power V_{M} to the system load 31 and the connection interface 33, so that the system load 31 and the terminal load 35 can maintain operation. In FIGS.1-2, Is represents the system power and I_{L} represents the load power. The system power Is is the power required to operate the system load 31 of the electronic device 30. The load power I_{L} is provided to the connection interface 33 of the electronic device 30 for supplying power to the terminal load 35. In this embodiment, the connection interface 33 is one in number. In other embodiments, the connection interface 33 can be plural in number; therefore, the terminal load 35 can also be plural in number.

In this embodiment, the back-end power converter 17 includes a DC-to-DC conversion unit 171 and a voltage stabilizing unit 173. The DC-to-DC conversion unit 171 is connected to the voltage stabilizing unit 173. The DC-to-DC conversion unit 171 is, for example, a phase-shift full bridge DC-to-DC converter. The voltage stabilizing unit 173 is used to reduce forward voltage drop for enhancing overall power transmission efficiency.

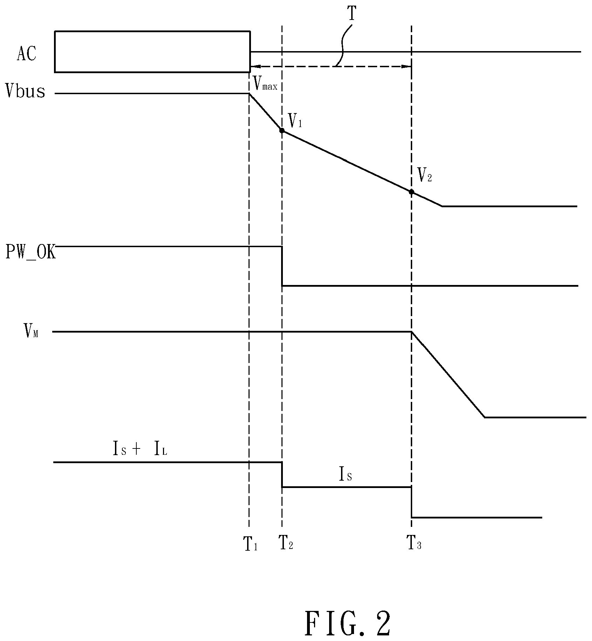

The microprocessor module 19 is connected with the front-end power converter 11, the power factor corrector 13, the energy storage element 15, the back-end power converter 17, and the electronic device 30 to obtain electrical signals of the front-end power converter 11, the power factor corrector 13, the energy storage element 15, and the back-end power converter 17 for subsequent control. The electrical signals are shown in FIG.2. The microprocessor module 19 is, for example, a MCU control module.

When the electronic device 30 enters a shutdown process, the microprocessor module 19 notifies the electronic device 30 to unload the power of the connection interface 33 (i.e., the load power I_{L}) according to a monitoring condition. The main power V_{M} continues to supply the system power Is to the system load 31 of the electronic device 30. The monitoring condition includes that the energy storage element 15 is discharged from the upper voltage limit value Vₘₐₓ to a first monitoring voltage value V1. Subsequently, when the energy storage element 15 is discharged from the first monitoring voltage value V1 to a second monitoring voltage value V2, the microprocessor module 19 turns off the main power V_{M}. The shutdown process can be triggered by a normal shutdown operation, a shutdown caused by an abnormal power outage, or a shutdown caused by other reasons.

As shown in FIGS. 1-2, when the power supply device 10 of the present invention is operated in the left area of time T1, it means that the power supply device 10 normally supplies power. At this time, the AC power of the external AC power source 50 is stable, and a terminal voltage V_{bus} of the energy storage element 15 is charged to the upper voltage limit, and an output signal PW_OK of the microprocessor module 19 is normal, and the back-end power converter 17 stably outputs the main power V_{M} to the electronic device 30, so that the system load 31 and the connection interface 33 can stably obtain the required system power Is and load power I_{L}.

When the power supply device 10 is operated at time T1, it means that the electronic device 30 enters the shutdown process. When the external AC power source 50 stops supplying AC power, the energy storage element 15 starts to discharge from the upper limit voltage value Vₘₐₓ. The output signal PW_OK of the microprocessor module 19, the main power V_{M} output by the back-end power converter 17, and the system load 31 of the electronic device 30 continue to distribute the main power V_{M} into the system power Is and the load power I_{L}, and supply them to the system load 31 and terminal load 35. This is unchanged from before the shutdown.

Until the energy storage element 15 is discharged to the first monitoring voltage value V1, that is, when the power supply device 10 is operated at time T2 as shown in FIG. 2, the microprocessor module 19 detects that the AC power has been turned off at time T2 and promptly switches its output signal PW_OK at time T2, so that the microprocessor module 19 notifies the system load 31 of the electronic device 30 to unload the load power I_{L} of the connection interface 33. As such, the electronic device 30 adjusts the distribution of the main power V_{M} and allocates the main power V_{M} entirely to the system power Is so as to reduce the power consumption of the terminal load 35. In this embodiment, in addition to discharging the energy storage element 15 to the first monitoring voltage value V1, the monitoring condition also includes confirming whether AC power is turned off. In other embodiments, only the first monitoring voltage value V1 of the energy storage element 15 can also be monitored.

In this embodiment, the state transition is from a high level to a low level. The main power V_{M} output by the back-end power converter 17 maintains a normal power level, that is, it will not be stepped down. At this time, the electronic device 30 can perform the shutdown process under a lighter load condition. As a result, the discharge time of the energy storage element 15 can be slowed to achieve the purposes of extending the hold-up time and stabilizing shutdown power.

In addition, the discharge time of the energy storage element 15 (from the first monitoring voltage value V1 to the second monitoring voltage value V2) is related to the number of the terminal load 35 that is unloaded. Therefore, when there are multiple output terminals, the microprocessor module 19 and the system load 31 of the electronic device 30 can also be adjusted by the number of unloaded terminal load 35, making the control of the hold-up time more flexible.

Furthermore, the energy storage element 15 can also be used to filter out the jitter in the AC signal, thereby improving anti-interference ability. Therefore, the present invention confirms that the AC power has been turned off through time T1 to T2 to ensure that the output signal PW_OK is stably supplied to the system load 31.

Then, when the energy storage element 15 is discharged from the first monitoring voltage value V1 to the second monitoring voltage value V2, that is, at time T3 in FIG. 2, the electronic device 30 has completed the shutdown process. The microprocessor module 19 stops supplying power by controlling the power factor corrector 13, thereby causing the back-end power converter 17 to stop outputting main power V_{M}.

It can be seen from the above that during the shutdown process, the main power V_{M} output by the back-end power converter 17 is maintained at a stable voltage level, thereby providing stable shutdown power.

In this way, the power supply device 10 of the present invention can monitor the discharge status of the energy storage element 15 during the shutdown process to trigger the system load 31 to unload the terminal load 35, and to provide the main power V_{M} to the system load 31 as much as possible to extend the hold-up time of the shutdown process, thereby stabilizing the power supply status of the system power during the shutdown process.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A power supply device (10) for supplying power to an electronic device (30), **characterized in that** comprising:
a front-end power converter (11) for rectifying AC power;
a power factor corrector (13) connected to the front-end power converter (11);
an energy storage element (15) connected to the power factor corrector (13) for being charged to an upper voltage limit value (Vₘₐₓ);
a back-end power converter (17) connected to the power factor corrector (13), the energy storage element (15), and the electronic device (30), and outputting a main power (V_{M}) to the electronic device (30) for supplying power required for operation of a system load (31) and at least one connection interface (33) of the electronic device (30); and
a microprocessor module (19) connected to the front-end power converter (11), the power factor corrector (13), the energy storage element (15), the back-end power converter (17), and the electronic device (30), wherein when the electronic device (30) enters a shutdown process, the microprocessor module (19) notifies the electronic device (30) to unload power of the at least one connection interface (33) according to a monitoring condition that includes the energy storage element (15) is discharged from the upper voltage limit value (Vₘₐₓ) to a first monitoring voltage value (Vi), so that the main power (V_{M}) continues to supply power to the system load (31) of the electronic device (30), and subsequently, when the energy storage element (15) is discharged from the first monitoring voltage value (Vi) to a second monitoring voltage value (V₂), the microprocessor module (19) turns off the main power (V_{M}).

2. The power supply device (10) as claimed in claim 1, **characterized in that** the at least one connection interface (33) includes a Power over Ethernet (PoE) port.

3. The power supply device (10) as claimed in claim 1, **characterized in that** time for the energy storage element (15) to be discharged from the first monitoring voltage value (Vi) to the second monitoring voltage value (V₂) is related to a condition for the electronic device (30) to unload the at least one connection interface (33).

4. The power supply device (10) as claimed in claim 1, **characterized in that** the monitoring condition includes that the AC power is turned off.

5. The power supply device (10) as claimed in claim 1, **characterized in that** during the shutdown process, the main power (V_{M}) is maintained at a stable voltage level.

6. The power supply device (10) as claimed in claim 1, **characterized in that** the energy storage element (15) includes a capacitor.
